(19) Europäisches Patentamt / European Patent Office / Office européen des brevets

(11) **EP 4 546 792 A1**

(12) **EUROPEAN PATENT APPLICATION**
published in accordance with Art. 153(4) EPC

(43) Date of publication:
30.04.2025 Bulletin 2025/18

(21) Application number: 23826568.0

(22) Date of filing: 21.06.2023

(51) International Patent Classification (IPC):
*H04N 19/85* (2014.01)

(86) International application number:
PCT/CN2023/101958

(87) International publication number:
WO 2023/246923 (28.12.2023 Gazette 2023/52)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 23.06.2022 CN 202210716251

(71) Applicant: Alibaba (China) Co., Ltd.
Binjiang District
Hangzhou, Zhejiang 310052 (CN)

(72) Inventors:
• CHEN, Bolin
Kowloon Tong,
CMC5006 Hong Kong (CN)
• WANG, Zhao
Beijing 100102 (CN)
• YE, Yan
San Diego, CA 92130 (US)
• WANG, Shiqi
Kowloon Tong,
Y-6414 Hong Kong (CN)

(74) Representative: Patentgruppen A/S
Aaboulevarden 31, 4th Floor
8000 Aarhus C (DK)

(54) **VIDEO ENCODING METHOD, VIDEO DECODING METHOD, AND ELECTRONIC DEVICE AND STORAGE MEDIUM**

(57) The embodiments of the present application provide a video encoding method, a decoding method, and an apparatus. The video encoding method includes: obtaining an original reference video frame and an original target video frame to be encoded; adjusting a resolution of the original target video frame to obtain an adjusted target video frame with a first preset resolution; and performing feature extraction on the adjusted target video frame to obtain a target feature through a feature extraction network corresponding to the first preset resolution; encoding the original reference video frame and the target features respectively to obtain a video bitstream, and performing video frame reconstruction based on the video bitstream to generate a reconstructed video frame with a same resolution as the original target video frame. **In** the embodiments of the present application, only one set of neural network models is needed to perform encoding and decoding operations for original target video frames of a variety of different resolutions, which has a wider scope of application and a simpler and more convenient operation process.

```
┌─────────────────────────────────────────┐ ⌐202
│ Obtain an original reference video frame │
│ and an original target video frame to    │
│ be encoded                               │
└─────────────────────────────────────────┘
                    │
                    ▼
┌─────────────────────────────────────────┐ ⌐204
│ Adjust a resolution of the original      │
│ target video frame to obtain an adjusted │
│ target video frame with a first preset   │
│ resolution                               │
└─────────────────────────────────────────┘
                    │
                    ▼
┌─────────────────────────────────────────┐ ⌐206
│ Perform feature extraction on the        │
│ adjusted target video frame to obtain    │
│ target features through a feature        │
│ extraction network corresponding to the  │
│ first preset resolution                  │
└─────────────────────────────────────────┘
                    │
                    ▼
┌─────────────────────────────────────────┐ ⌐208
│ Separately encode the original reference │
│ video frame and the target feature to    │
│ obtain a video bitstream, and perform a  │
│ video frame reconstruction based on the  │
│ video bitstream to generate a            │
│ reconstructed video frame with a same    │
│ resolution as the original target        │
│ video frame                              │
└─────────────────────────────────────────┘
```

*Fig. 2*

EP 4 546 792 A1

## Description

This application claims priority to Chinese Patent Application filed with the China Patent Office on 23 June 2022, with Application No. 202210716251.4 and entitled "Video Encoding Method, Video Decoding Method, Electronic device and Storage Medium", which is incorporated herein by reference in its entirety.

## Technical Field

Embodiments of the present application relate to the field of computer technologies, and in particular to video encoding methods, video decoding methods, electronic devices, and storage media.

## Background

With the continuous development of computer technologies, lifestyles of the people have also undergone tremendous changes. For example, in daily work and life, people's demand for video conferencing and video live broadcasting increases continuously.

Video encoding and decoding is the key to realizing video conferencing and video live broadcasting. With the continuous development of machine learning, a codec method based on deep video generation can be used to encode and decode videos (especially facial videos). This method mainly uses a neural network model to deform a reference frame based on the motion of a frame to be encoded to obtain a reconstructed frame corresponding to the frame to be encoded. The above method performs encoding and decoding operations on video frames in an end-to-end manner to achieve video frame reconstruction.

The above-mentioned codec method based on deep video generation with a set of completely trained neural network models can usually only be used to reconstruct video frames with fixed resolutions to be encoded, and cannot be compatible with multiple different resolutions. However, in practical applications, due to factors such as network bandwidth, multiple resolutions, rather than a fixed resolution, of video frames to be encoded may exist. At this time, a set of corresponding neural network models has to be trained for each resolution, and then in an application stage, a corresponding network model is loaded according to an actual resolution of a video frame to be encoded. Such operations are complicated and very inconvenient.

## Summary

In view of this, embodiments of the present application provide video encoding methods, decoding methods, electronic devices, and storage media to at least partially solve the above problems.

According to the first aspect of the embodiments of the present application, a video encoding method is provided, and includes:

   obtaining an original reference video frame and an original target video frame to be encoded;
   adjusting a resolution of the original target video frame to obtain an adjusted target video frame with a first preset resolution, and performing feature extraction on the adjusted target video frame to obtain a target feature through a feature extraction network corresponding to the first preset resolution; and
   encoding the original reference video frame and the target feature respectively to obtain a video bitstream, and performing video frame reconstruction based on the video bitstream to generate a reconstructed video frame with a same resolution as the original target video frame.

According to the second aspect of the embodiments of the present application, a video decoding method is provided, and includes:

   obtaining and decoding a video bitstream to obtain an original reference video frame and a target feature;
   adjusting a resolution of the original reference video frame to obtain an adjusted reference video frame with a first preset resolution; and extracting features from the adjusted reference video frame through a feature extraction network to obtain a reference feature;
   performing motion estimation based on the reference feature and the target feature through a motion estimation network to obtain a motion estimation result; and
   generating a reconstructed video frame with a same resolution as the original reference video frame based on the motion estimation result and the original reference video frame through a generative network.

According to the third aspect of the embodiments of the present application, a video encoding method is provided, and includes:

   obtaining an original reference video frame and an original target video frame to be encoded;
   adjusting a resolution of the original target video frame to obtain an adjusted target video frame with a first preset resolution; and performing feature extraction on the adjusted target video frame to obtain target features through a feature extraction network corresponding to the first preset resolution; and
   encoding the original reference video frame and the target features respectively to obtain a video bitstream, to enable a decoding end device to: decode the video bitstream to obtain the original reference video frame and the target features, adjust the resolution of the original reference video frame to obtain an adjusted reference video frame with the first preset resolution, and extract features of the adjusted reference video frame to obtain reference features through the feature extraction network, perform a motion estimation based on the reference features and the target features through a motion estimation network to obtain a motion estimation result, and generate a reconstructed video frame with a same resolution as the original reference video frame based on the motion estimation result and the original reference video frame through a generative network.

According to the fourth aspect of the embodiments of the present application, a video encoding method is provided, and includes:

    obtaining an original video clip captured by a video acquisition device;
    determining an original reference video frame and an original target video frame to be encoded from the original video clip;
    adjusting a resolution of the original target video frame to obtain an adjusted target video frame with a first preset resolution; and extracting features of the adjusted target video frame through a feature extraction network corresponding to the first preset resolution to obtain target features;
    encoding the original reference video frame and the target features respectively to obtain a video bitstream; and
    sending the video bitstream to a conference terminal device, to cause the conference terminal device to perform a video frame reconstruction based on the video bitstream, and generate and display a reconstructed video frame with a same resolution as the original target video frame.

According to the fifth aspect of the embodiments of the present application, an electronic device is provided, and includes: a processor, a memory, a communication interface, and a communication bus, wherein the processor, the memory and the communication interface communicate with each other through the communication bus; the memory is configured to store at least one executable instruction, the executable instruction enables the processor to perform operations corresponding to the video encoding method described in the first aspect, the third aspect or the fourth aspect, or operations corresponding to the video decoding method described in the second aspect.

According to the sixth aspect of the embodiments of the present application, a computer storage medium is provided, on which a computer program is stored, and when the program is executed by a processor, the video encoding method as described in the first aspect, the third aspect or the fourth aspect is implemented, or the video decoding method as described in the second aspect is implemented.

According to the seventh aspect of the embodiments of the present application, a computer program product is provided, and includes computer instructions, wherein the computer instructions instruct a computing device to perform operations corresponding to the video encoding method as described in the first aspect, the third aspect or the fourth aspect, or operations corresponding to the video decoding method as described in the second aspect.

According to the video encoding methods and decoding methods provided by the embodiments of the present application, in an encoding stage, after original target video frames to be encoded are obtained, the original target video frames are universally resolved through a resolution adjustment operation, and the original target video frames are converted into adjusted target video frames with a fixed resolution (a first preset resolution), so that even if the original target video frames have a variety of resolutions, video frames with a fixed resolution are finally input to a feature extraction network. In this way, there is no need to train multiple feature extraction networks for different resolutions, and only one feature extraction network corresponding to the first preset resolution (a feature extraction network for extracting features from video frames with the first preset resolution) is required to achieve the encoding of original target video frames with multiple different resolutions, which has a wider scope of application and higher versatility. At the same time, the operation is simpler and more convenient. In addition, correspondingly, in a decoding stage, original reference video frames are also universally resolved, and the original reference video frames are converted into adjusted reference video frames with a fixed resolution, thereby obtaining reference features and target features with a fixed resolution. As such, features that are finally input to a motion estimation network and a generative network are features with a fixed resolution, and thereby only one motion estimation network and one generative network are required to achieve decoding in various scenes of target video frames with different resolutions. In summary, the embodiments of the present application only require one set of neural network models to perform encoding and decoding operations for original target video frames of various resolutions, which has a wider scope of application with a simpler and more convenient process of operation.

**Brief Description of the Drawings**

In order to more clearly illustrate the technical solutions in the embodiments of the present application or existing technologies, accompanying drawings that are used in the embodiments or the existing technologies are briefly described below. Apparently, the drawings described below are only some embodiments recorded in the embodiments of the present application. For one of ordinary skill in the art, other drawings can also be obtained based on these drawings.

FIG. 1 is a schematic diagram of a framework of methods of encoding and decoding based on deep video generation.

FIG. 2 is a flowchart of a video encoding method according to a first embodiment of the present application.

FIG. 3 is a schematic diagram of a scenario example in the embodiment shown in FIG. 2.

FIG. 4 is a flowchart of a video decoding method according to a second embodiment of the present application.

FIG. 5 is a flowchart of a video decoding method according to a third embodiment of the present application.

FIG. 6 is a schematic diagram of a scenario example in the embodiment shown in FIG. 5.

FIG. 7 is a flowchart of a video decoding method according to a fourth embodiment of the present application.

FIG. 8 is a schematic diagram of a scenario example in the embodiment shown in FIG. 7.

FIG. 9 is a video decoding method according to a fifth embodiment of the present application.

FIG. 10 is a schematic diagram of a scenario example in the embodiment shown in FIG. 9.

FIG. 11 is a flowchart of a video decoding method according to a sixth embodiment of the present application.

FIG. 12 is a schematic diagram of a scenario example in the embodiment shown in FIG. 11.

FIG. 13 is a flowchart of a video encoding method according to a seventh embodiment of the present application.

FIG. 14 is a flowchart of a video encoding method according to an eighth embodiment of the present application.

FIG. 15 is a structural block diagram of a video encoding apparatus according to a ninth embodiment of the present application.

FIG. 16 is a structural block diagram of a video decoding apparatus according to a tenth embodiment of the present application.

FIG. 17 is a structural schematic diagram of an electronic device according to an eleventh embodiment of the present application.

## Detailed Description

In order to enable one skilled in the art to better understand the technical solutions in the embodiments of the present application, the technical solutions in the embodiments of the present application will be clearly and completely described in combination with the drawings in the embodiments of the present application. Apparently, the described embodiments represent only part and not all of the embodiments of the present application.

Based on the embodiments in the embodiments of the present application, all other embodiments obtained by one of ordinary skill in the art should belong to the scope of protection of the embodiments of the present application.

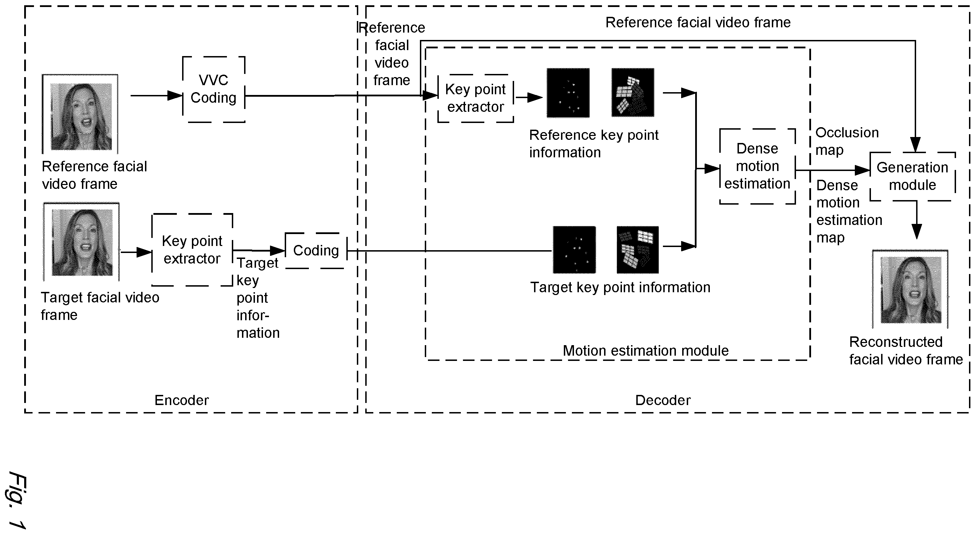

FIG. 1 is a schematic diagram of a framework of methods of encoding and decoding based on deep video generation. The main principle of this method is to deform a reference frame based on a motion of a frame to be encoded to obtain a reconstructed frame corresponding to the frame to be encoded. A basic framework of the methods of encoding and decoding based on deep video generation is explained in combination with FIG. 1.

The first step is an encoding stage. An encoder uses a feature extractor to extract target key point information of a target facial video frame to be encoded, and encodes the target key point information. At the same time, a reference facial video frame is encoded using a traditional image encoding method (such as VVC, HEVC, etc.).

The second step is a decoding stage. A motion estimation module in a decoder extracts reference key point information of a reference facial video frame through a key point extractor; and performs dense motion estimation based on the reference key point information and the target key point information to obtain a dense motion estimation map and an occlusion map, wherein the dense motion estimation map represents a relative motion relationship between the target facial video frame and the reference facial video frame in a feature domain represented by the key point information, and the occlusion map represents a degree to which each pixel in a target facial video frame is occluded.

The third step is the decoding stage. A generation module in the decoder performs deformation processing on the reference facial video frame based on the dense motion estimation map to obtain a deformation processing result, and then multiplies the deformation processing result with the occlusion map to output a reconstructed facial video frame.

The method shown in FIG. 1 is based on a neural network model composed of a feature extractor (a feature extraction module), a motion estimation module, and a generation module to perform encoding and decoding operations on video frames. After training of each neural network module in the above model is completed, its internal parameters and input and output data resolution size remain fixed. Therefore, in an inference stage, a set of trained neural network models can only be used to reconstruct video frames with a specific resolution to be encoded, and cannot be compatible with multiple different resolutions.

However, in practical applications, due to factors such as network bandwidth, etc., multiple resolutions, rather than a fixed resolution, of video frames to be encoded may exist. At this time, using the above-mentioned methods of encoding and decoding based on deep video generation, one set of corresponding neural network models has to be trained for each resolution, and then in an inference stage, a corresponding model is loaded according to an actual resolution of a video frame to be encoded. Such operation is complicated and very inconvenient.

In the embodiments of the present application, resolutions of original target video frames are unified by a resolution adjustment operation, and the original target video frames are converted into adjusted target video frames with a specific resolution. Subsequent feature extraction and other operations are then performed to encode and decode downsampled target video frames, and reconstructed video frames having resolutions that are the same as respective ones of the original target video frames are finally output. In this way, even if the original target video frames have a variety of different resolutions, data finally input to a feature extraction network, a motion estimation network and a generative network still has a fixed resolution. Therefore, there is no need to train multiple neural networks for different resolutions, and only one neural network is needed to realize the encoding of multiple original target video frames with different resolutions, thus having a wider scope of application and a higher versatility. At the same time, the operation is simpler and more convenient.

Details of implementation of the embodiments of the present application are further explained in conjunction with the accompanying drawings of the embodiments of the present application.

First Embodiment

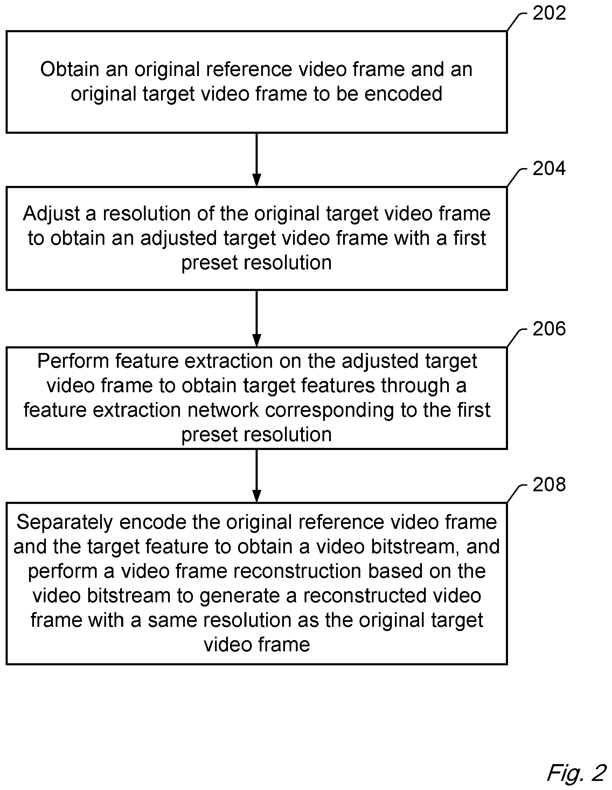

Referring to FIG. 2, FIG. 2 is a flowchart of a video encoding method according to the first embodiment of the present application. Specifically, the video encoding method provided in this embodiment includes the following steps:
Step 202: Obtain an original reference video frame and an original target video frame to be encoded.

Specifically, an original reference video frame and an original target video frame in the present application are video frames with the same resolution, and the original reference video frame and the original target video frame can both be facial video frames. In addition, in the embodiments of the present application, the resolution sizes of the original reference video frame and the original target video frame are not limited.

Further, in order to obtain a relatively high quality reconstructed video frame when a video frame is subsequently reconstructed, the original reference frame and the original target video frame to be encoded can be selected from the same video clip, that is, in this step, the original reference video frame and the original target video frame to be encoded from the same video clip can be obtained.

Step 204: Adjust a resolution of the original target video frame to obtain an adjusted target video frame with a first preset resolution.

Specifically, in the embodiments of the present application, a specific value of the first preset resolution is not limited, and can be customized according to computing power resources, network status, and timeliness requirements of encoding and decoding of encoding and decoding devices.

Specifically, in order to reduce the bit rate, the first preset resolution can be set to a lower value. Correspondingly, in this step, the original target video frame can be downsampled to obtain an adjusted target video frame with the first preset resolution.

Optionally, in some embodiments, the adjusted target video frame can be obtained in the following manner: determining a first target scaling factor based on the resolution of the original target video frame; scaling the original target video frame using the first target scaling factor to obtain the adjusted target video frame with the first preset resolution. The first target scaling factor can be determined based on a size relationship between the resolution of the original target video frame and the first preset resolution. Specifically, a ratio of the resolution of the original target video frame to the first preset resolution can be determined as the first target scaling factor.

Furthermore, for a number of possible resolutions of original target video frames, respective scaling factors corresponding to each resolution can be pre-calculated and put into a first scaling factor sequence. After that, after an original target video frame is obtained, a first target scaling factor corresponding to a resolution of the original target video frame can be determined from the preset first scaling factor sequence according to a preset corresponding relationship between resolutions and scaling factors.

Step 206: Perform feature extraction on the adjusted target video frame to obtain target features through a feature extraction network corresponding to the first preset resolution.

In the embodiments of the present application, feature extraction can be performed on the adjusted target video frame with the help of a machine learning model (a feature extraction network) to obtain a target feature. Specifically, the adjusted target video frame can be input into a pre-trained feature extraction network, to cause the feature extraction network to output a target feature of the adjusted target video frame.

The feature extraction network in the embodiments of the present application is a feature extraction network corresponding to the first preset resolution, i.e., a network model for extracting features from video frames with the first preset resolution.

The target feature can be information used to characterize features of the adjusted target video frame. For a facial video frame, the target feature can specifically be a target key point feature, or a target compact feature, wherein the target key point feature characterizes feature information of preset key points in the adjusted target video frame, the target compact feature characterizes key information such as position information of facial features, posture information, and expression information, etc., in the adjusted target video frame.

In the embodiments of the present application, the structure and parameters of the feature extraction network are not limited and can be set according to actual needs. For example, the feature extraction network can be a U-Net network composed of a convolutional layer and a generalized division normalization layer, etc.

Step 208: Separately encode the original reference video frame and the target feature to obtain a video bitstream, and perform a video frame reconstruction based on the video bitstream to generate a reconstructed video frame with a same resolution as the original target video frame.

Specifically, for an original reference video frame, a relatively small quantization distortion can be used for encoding, and an encoding process retains complete data of the original reference video frame. For example, the original reference video frame can be encoded in a universal video coding (VVC) manner. For the target feature, encoding can be performed by quantization and entropy coding.

Furthermore, in some embodiments of the present application, in order to further reduce the bit rate of video encoding, an original reference video frame can also be adjusted in resolution to obtain an adjusted reference video frame, and feature extraction can be performed on the adjusted reference video frame to obtain a reference feature. A differential operation can then be performed on the target feature and the reference feature, and a difference obtained by the differential operation is encoded to form a video bitstream.

Compared with a method of encoding directly based on a target feature, the above method is based on a difference between a target feature and a reference feature to obtain a video bitstream. Apparently, a data volume of the difference between the target feature and the reference feature is smaller than a data volume of the target feature itself. Therefore, encoding based on the difference between the target feature and the reference feature can effectively reduce the bit rate of video encoding.

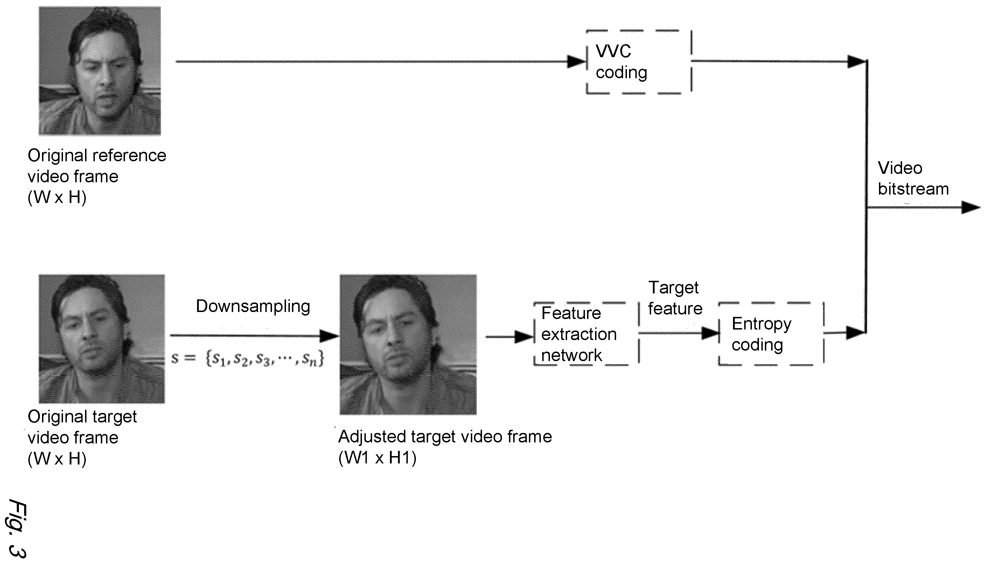

Referring to FIG. 3, FIG. 3 is a schematic diagram of a scenario corresponding to the first embodiment of the present application. Hereinafter, the embodiments of the present application will be described with reference to the schematic diagram shown in FIG. 3, and a specific scenario is used as an example for illustration:

An original reference video frame and an original target video frame to be encoded are obtained respectively, wherein resolutions of the original reference video frame and the original target video frame are both: W×H (the number of pixels included in a unit size in the width direction is W, and the number of pixels included in a unit size in the height direction is H). A first target scaling factor is determined from a first scaling factor sequence $s$ = $\{s_1, s_2, s_3, ... , s_n\}$, and then the original target video frame is downsampled based on the first target scaling factor to obtain an adjusted target video frame with W1×H1 (a first preset resolution). Feature extraction is performed on the adjusted target video frame through a feature extraction network to obtain target features. The original reference video frame and the target features are separately encoded to obtain a video bitstream, wherein the target features are encoded by entropy coding, and the original reference video frame is encoded by VVC.

In the embodiments of the present application, in an encoding stage, after original target video frames to be encoded are obtained, resolutions of the original target video frames are unified through a resolution adjustment operation, and the original target video frames are converted into adjusted target video frames with a fixed resolution (a first preset resolution), so that even if the original target video frames have a variety of resolutions, video frames with a fixed resolution are finally input to the feature extraction network. In this way, there is no need to train multiple feature extraction networks for different resolutions, and only one feature extraction network corresponding to the first preset resolution (a feature extraction network for extracting features from video frames with the first preset resolution) is needed to achieve encoding of multiple original target video frames with different resolutions, which has a wider scope of application and higher versatility. At the same time, the operation is simpler and more convenient.

The video encoding method provided in the first embodiment of the present application can be executed by a video encoding end (an encoder) to encode video files with different resolutions, especially facial video files, so as to compress the digital bandwidth of the video files. It can be applied to a variety of different scenarios, such as: conventional storage and streaming of video games with various resolutions involving faces. Specifically, the video encoding method provided in the embodiments of the present application can be used to encode game video frames to form a corresponding video bitstream for storage and transmission in video streaming services or other similar applications. Another example includes low-latency scenarios such as video conferencing and live video broadcasting. Specifically, the video encoding method provided in the embodiments of the present application can be used to encode facial video data with various resolutions collected by a video acquisition device to form a corresponding video bitstream, which is sent to a conference terminal, and the conference terminal decodes the video bitstream to obtain corresponding facial video pictures. Another example includes virtual reality scenes. The facial video encoding method provided in the embodiments of the present application can be used to encode facial video data with various resolutions collected by a video acquisition device to form a corresponding video bitstream, which is sent to a virtual reality related device (such as VR virtual glasses, etc.), and the video bitstream can be decoded by the VR device to obtain corresponding facial video pictures. A corresponding VR function is realized based on the facial video pictures, etc.

Second Embodiment

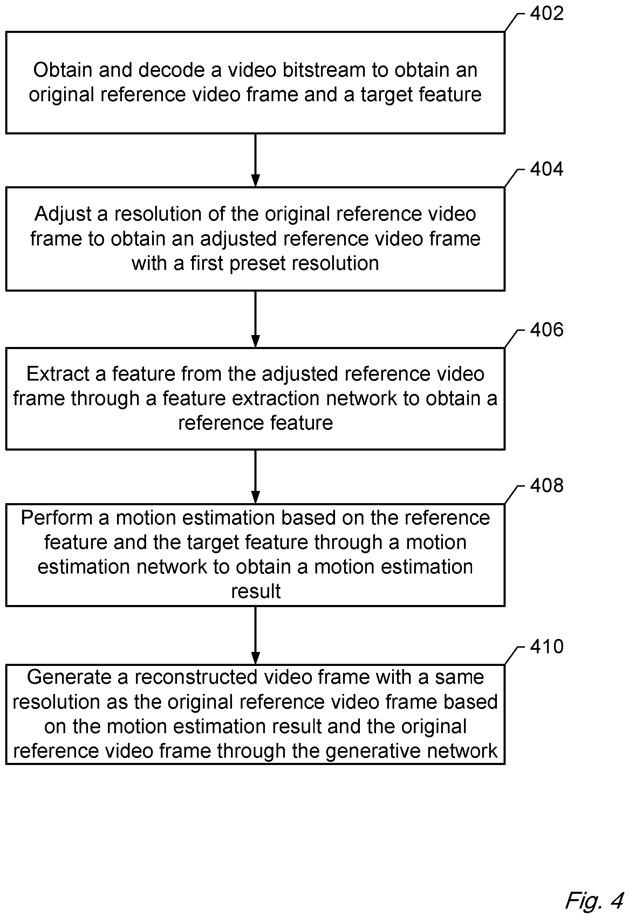

Referring to FIG. 4, FIG. 4 is a flowchart of a video decoding method according to the second embodiment of the present application. Specifically, the video decoding method provided in this embodiment includes the following steps:
Step 402: Obtain and decode a video bitstream to obtain an original reference video frame and a target feature.
The target feature is obtained by extracting features from an adjusted target video frame, wherein the adjusted target video frame is a video frame with a first preset resolution obtained by adjusting the resolution of the original target video frame.
Step 404: Adjust a resolution of the original reference video frame to obtain an adjusted reference video frame with a first preset resolution.
In this step, a specific method of adjusting the resolution of the original reference video frame is the same as the specific method of adjusting the resolution of the original target video frame in step 204 of the first embodiment. Specifically, the original reference video frame can be downsampled to obtain an adjusted reference video frame with a first preset resolution.
Step 406: Extract a feature from the adjusted reference video frame through a feature extraction network to obtain a reference feature.
In this step, the specific method of obtaining the reference feature can refer to the specific method of obtaining the target feature in step 206 of the first embodiment, which will not be repeated herein.
Step 408: Perform a motion estimation based on the reference feature and the target feature through a motion estimation network to obtain a motion estimation result.
Specifically, in one method, sparse motion estimation can be performed based on the reference feature and the target feature to obtain a sparse motion estimation map, and the obtained sparse motion estimation map is directly used as a motion estimation result. The sparse motion estimation map represents a relative motion relationship between the original reference video frame corresponding to the reference feature and the original target video frame corresponding to the target feature in a preset sparse feature domain.
In another method, after obtaining the sparse motion estimation map, based on the sparse motion estimation map and an initial reconstructed video frame generated by the initial reference video frame, dense motion estimation is performed again to obtain a dense motion estimation map and an occlusion map as a final motion estimation result. The dense motion estimation map represents a relative motion relationship between the original target video frame and the original reference video frame in a preset dense feature domain. The occlusion map represents a degree to which each pixel in the original target video frame is occluded.
Compared with the above two methods, the former method has a simple calculation process, so the efficiency of calculation is high, and a motion estimation result can be obtained quickly. The latter method obtains a relative motion relationship between an original target video frame and an original reference facial video frame in a denser feature domain, and the relative motion relationship is more accurate than the relative motion relationship represented by the sparse motion estimation map.
Step 410: Generate a reconstructed video frame with a same resolution as the original reference video frame based on the motion estimation result and the original reference video frame through the generative network.
Specifically, the generative network deforms the original reference video frame based on the motion estimation result obtained in step 408 to obtain a deformation processing result, and outputs a reconstructed video frame based on the deformation processing result.
In the embodiments of the present application, in a decoding stage, resolutions of original reference video frames are also unified, and the original reference video frames are converted into adjusted reference video frames with a fixed resolution, thereby obtaining reference features and target features with a fixed resolution. As such, features finally input to a motion estimation network and a generative network are also features with a fixed resolution, and thereby only one motion estimation network and one generative network are required to realize decoding in various scenarios having target video frames with different resolutions. In the embodiments of the present application, only one set of neural network models is needed to perform encoding and decoding operations for original target video frames of various resolutions, which has a wider scope of application and a simpler and more convenient operation process.
The video decoding method of the present embodiment can be executed by any appropriate electronic device with data capabilities, including but not limited to, a server, a PC, etc.

Third Embodiment

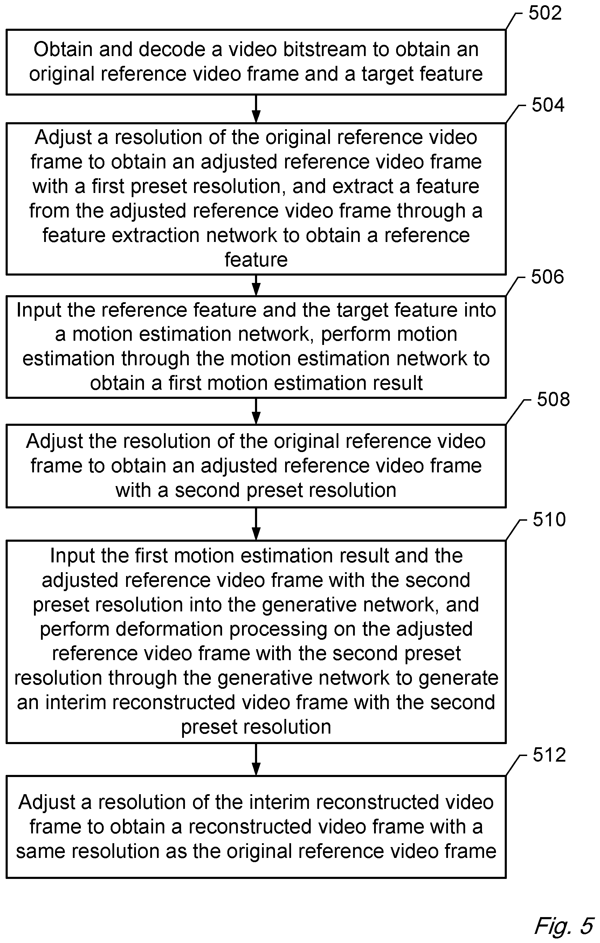

Referring to FIG. 5, FIG. 5 is a flowchart of a video decoding method according to the third embodiment of the present application. Specifically, the video decoding method provided in the present embodiment includes the following steps:
Step 502: Obtain and decode a video bitstream to obtain an original reference video frame and a target feature.
Step 504: Adjust a resolution of the original reference video frame to obtain an adjusted reference video frame with a first preset resolution, and extract a feature from the adjusted reference video frame through a feature extraction network to obtain a reference feature.
Specifically, for example, an original reference video frame can be downsampled to obtain an adjusted reference video frame with a first preset resolution; and a feature is extracted from the adjusted reference video frame through a feature extraction network to obtain a reference feature.

Step 506: Input the reference feature and the target feature into a motion estimation network, perform motion estimation through the motion estimation network to obtain a first motion estimation result.

Step 508: Adjust the resolution of the original reference video frame to obtain an adjusted reference video frame with a second preset resolution.

In this step, the original reference video frame may be downsampled to obtain an adjusted reference video frame with a second preset resolution.

Optionally, in some embodiments, the adjusted reference video frame with the second preset resolution may be obtained in the following manner: determining a second target scaling factor based on the resolution of the original reference video frame; scaling the original reference video frame using a second target scaling factor to obtain the adjusted reference video frame with the second preset resolution, wherein the second target scaling factor may be determined based on a size relationship between the resolution of the original reference video frame and the second preset resolution. Specifically, a ratio of the resolution of the original reference video frame to the second preset resolution may be determined as the second target scaling factor.

Further, for situations in which a plurality of different resolutions of original reference video frames may exist, a respective scaling factor corresponding to each resolution may be pre-calculated and placed in a second scaling factor sequence. Afterwards, after an original reference video frame is obtained, a second target scaling factor corresponding to the resolution of the original reference video frame may be determined from the preset second scaling factor sequence according to preset correspondence relationships between resolutions and scaling factors.

Step 510: Input the first motion estimation result and the adjusted reference video frame with the second preset resolution into the generative network, and perform deformation processing on the adjusted reference video frame with the second preset resolution through the generative network to generate an interim reconstructed video frame with the second preset resolution.

The second preset resolution in the above step 508 is configured according to the first preset resolution and structural parameters of the generative network.

Specifically, the first motion estimation result obtained in step 506 has the first preset resolution. In addition, the generative network generally includes a downsampling subnetwork, a deformation subnetwork, and an upsampling subnetwork. In this step, specific operations performed by the generative network include: first, downsampling a downsampled reference video frame through an internal downsampling subnetwork to obtain a second downsampled reference frame; then, deforming the second downsampled reference frame by a deformation subnetwork with reference to the first motion estimation result to obtain a deformed reference frame, and upsampling the deformed reference frame by an upsampling subnetwork to output a result. In order to smoothly perform a deformation process, the resolutions of the second downsampled reference frame and the first motion estimation result need to match each other, that is, the second downsampled reference frame and the first motion estimation result have the same resolution (both have the first preset resolution in the embodiments of the present application). Therefore, in the embodiments of the present application, when setting the second preset resolution, the second downsampled reference frame obtained after the downsampled reference video frame with the second preset resolution is downsampled by the downsampling subnetwork can match the resolution of the first motion estimation result, both of which are the first preset resolution.

Step 512: Adjust a resolution of the interim reconstructed video frame to obtain a reconstructed video frame with a same resolution as the original reference video frame.

The interim reconstructed video frame generated by the generative network has the second preset resolution. If the second preset resolution is obtained by downsampling the original reference video frame, in this step, it is necessary to perform an upsampling operation on the interim reconstructed video frame in opposite to step 508, in order to obtain a reconstructed video frame with the same resolution as the original reference video frame.

Specifically, the upsampling in this step can be performed in the following manner: determining an inverse of the second target scaling factor in the above step 508 as a third target scaling factor; downsampling the interim reconstructed video frame using the third target scaling factor to obtain a reconstructed video frame with a same resolution as the original reference video frame.

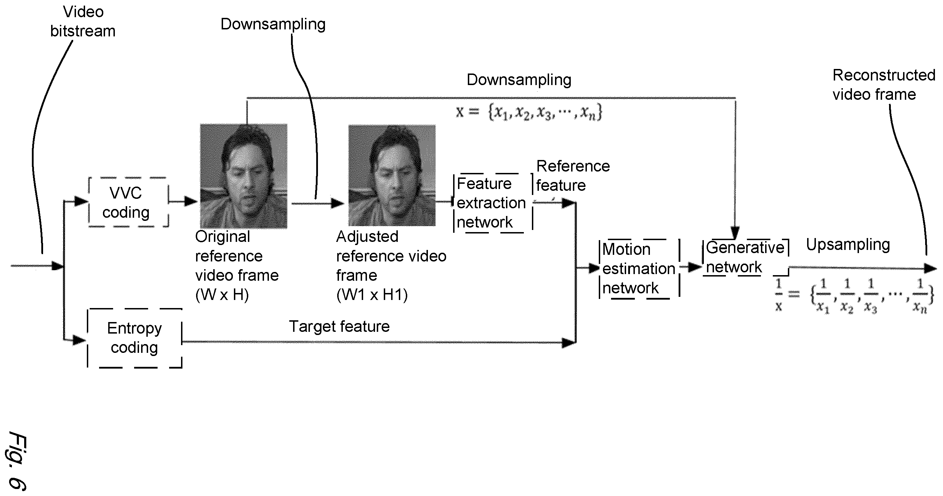

Referring to FIG. 6, FIG. 6 is a schematic diagram of a scenario corresponding to the third embodiment of the present application. With reference to the schematic diagram shown in FIG. 6, a specific scenario example is taken to illustrate the embodiments of the present application below:

decoding a video bitstream to obtain an original reference video frame with a resolution of W×H and a target feature; downsampling the original reference video frame to obtain an adjusted reference video frame with a resolution of W1×H1 (a first preset resolution); and obtaining a corresponding reference feature through a feature extraction network; inputting the reference feature and the target feature into a motion estimation network to obtain a first motion estimation result; at the same time, determining a second target scaling factor from a second scaling factor sequence $x = \{x_1, x_2, x_3, \ldots, x_{1n}\}$ to downsample the original reference video frame to obtain an adjusted reference video frame with a second preset resolution (not shown in the figure); obtaining an interim reconstructed video frame with the second preset resolution based on the adjusted reference video frame with the second preset resolution and the first motion estimation result through a generative network; and determining a third target scaling factor from a third scaling factor sequence $\frac{1}{x} = \left\{ \frac{1}{x_1}, \frac{1}{x_2}, \frac{1}{x_3}, \ldots, \frac{1}{x_n} \right\}$ to upsample the interim reconstructed video frame to obtain a reconstructed video frame with a resolution of W×H.

In the embodiments of the present application, in a decoding stage, resolutions of original reference video frames are also unified, and the original reference video frames are converted into adjusted reference video frames with a fixed resolution, thereby obtaining reference features and target features with a fixed resolution. As such, features finally input to a motion estimation network and a generative network are also features with a fixed resolution, and only one motion estimation network and one generative network are required to achieve decoding in scenarios having a plurality of target video frames with different resolutions. In the embodiments of the present application, for original target video frames with a variety of different resolutions, only one set of neural network models is required to perform encoding and decoding operations, which has a wider range of applications and a simpler and more convenient process of operation.

In addition, in the embodiments of the present application, a resolution adjustment process (an upsampling process and a downsampling process) is performed on video frames, i.e., performed in an image domain rather than a feature domain. Therefore, it is beneficial for each network in a neural network model to learn the correct motion information, etc., thereby improving the quality of video frame reconstruction.

The video decoding method of this embodiment can be executed by any appropriate electronic device with data capabilities, including but not limited to, a server, a PC, etc.

Fourth Embodiment

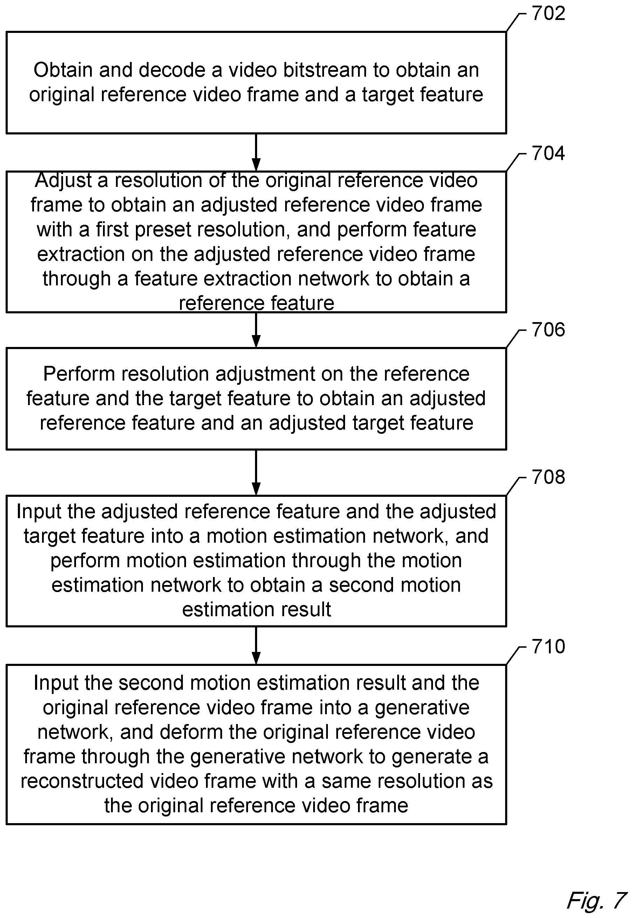

Referring to FIG. 7, FIG. 7 is a flowchart of a video decoding method according to the fourth embodiment of the present application. Specifically, the video decoding method provided in this embodiment includes the following steps:
Step 702: Obtain and decode a video bitstream to obtain an original reference video frame and a target feature.

Step 704: Adjust a resolution of the original reference video frame to obtain an adjusted reference video frame with a first preset resolution, and perform feature extraction on the adjusted reference video frame through a feature extraction network to obtain a reference feature.

Specifically, in this step, an original reference video frame can be downsampled to obtain an adjusted reference video frame with a first preset resolution.

Step 706: Perform resolution adjustment on the reference feature and the target feature to obtain an adjusted reference feature and an adjusted target feature.

If the original reference video frame is downsampled in step 704, then in this step, the reference feature and the target feature can be upsampled accordingly to obtain an adjusted reference feature and an adjusted target feature.

Step 708: Input the adjusted reference feature and the adjusted target feature into a motion estimation network, and perform motion estimation through the motion estimation network to obtain a second motion estimation result.

Step 710: Input the second motion estimation result and the original reference video frame into a generative network, and deform the original reference video frame through the generative network to generate a reconstructed video frame with a same resolution as the original reference video frame.

A scaling factor (a sampling factor) used in the resolution adjustment in the above step 706 is set according to the resolution of the original reference video frame, the structural parameters of the motion estimation network, and the structural parameters of the generative network. Specifically, similar to step 510, in order to smoothly execute the deformation processing in the generative network, after motion estimation is performed on the adjusted reference feature and the adjusted target feature that are obtained according to the above sampling factor through the motion estimation network, the second motion estimation result that is obtained is then downsampled through a downsampling subnetwork, and can have the same resolution as that of the original reference video frame.

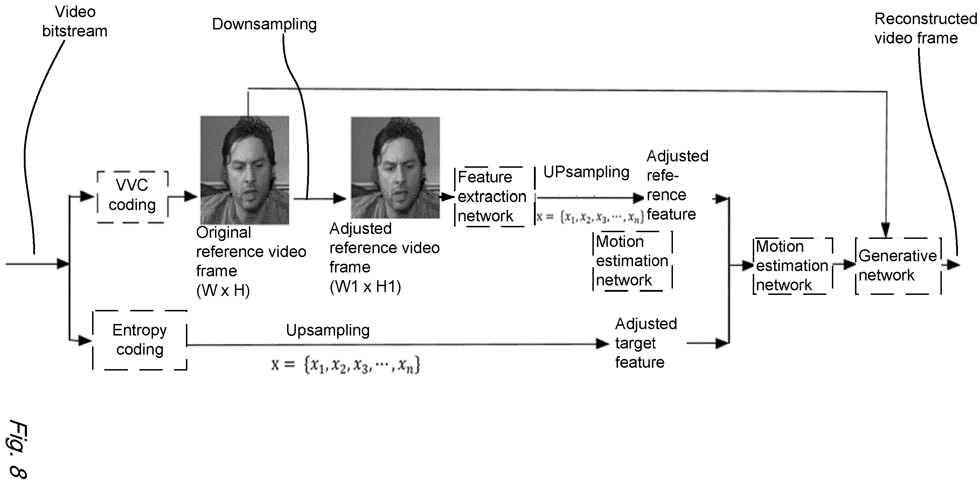

Referring to FIG. 8, FIG. 8 is a schematic diagram of a scenario corresponding to the fourth embodiment of the present application. The embodiments of the present application will be illustrated below using a specific scenario example with reference to the schematic diagram shown in FIG. 8:
decoding a video bitstream to obtain an original reference video frame with a resolution of W×H and a target feature; downsampling the original reference video frame to obtain an adjusted reference video frame with a resolution of W1×H1 (a first preset resolution); and obtaining a corresponding reference feature through a feature extraction network; determining a target scaling factor from a scaling factor sequence x = {$x_1$, $x_2$, $x_3$, ... , $x_{1n}$} to upsample the reference feature and the target feature to obtain an adjusted reference feature and an adjusted target feature; obtaining a second motion estimation result through a motion estimation network; and generating a reconstructed video frame with a same resolution as the original reference video frame based on the second motion estimation result and the original reference video frame through a generative network.

In the embodiments of the present application, in a decoding stage, resolutions of original reference video frames are also unified, and the original reference video frames are converted into adjusted reference video frames with a fixed resolution, thereby obtaining reference features and target features with a fixed resolution. As such, features finally input to a motion estimation network and a generative network are also features with a fixed resolution, and only one motion estimation network and one generative network are required to achieve decoding in scenarios having a plurality of target video frames with different resolutions. In the embodiments of the present application, for original target video frames with a variety of different resolutions, only one set of neural network models is required to perform encoding and decoding operations, which has a wider range of applications and a simpler and more convenient process of operation.

In addition, in the embodiments of the present application, when the generative network outputs a result, the result is not upsampled or downsampled. Therefore, visual artifacts in a final reconstructed video frame can be effectively avoided.

The video decoding method of this embodiment can be executed by any appropriate electronic device with data capabilities, including but not limited to, a server, a PC, etc.

Fifth Embodiment

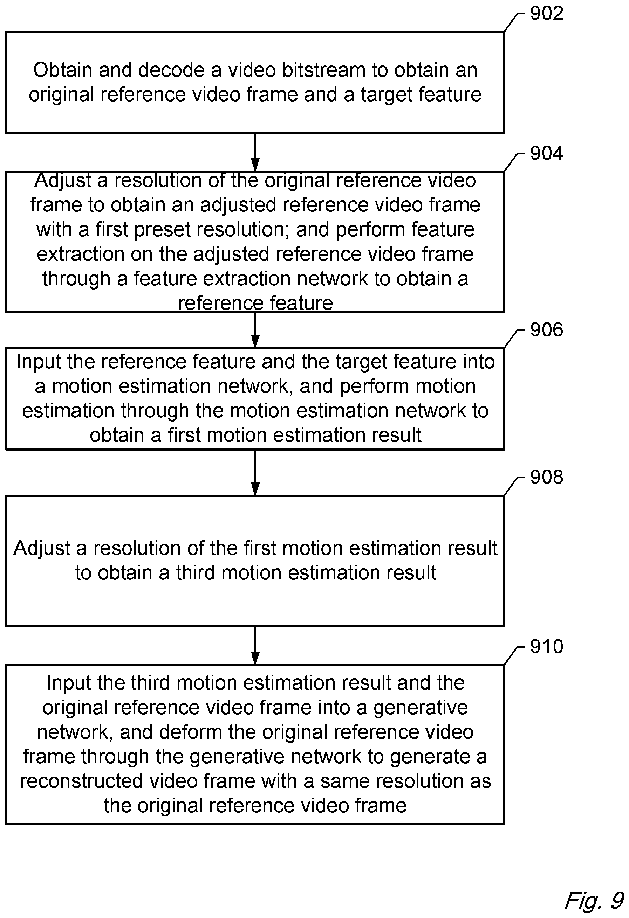

Referring to FIG. 9, FIG. 9 is a flowchart of a video decoding method according to the fifth embodiment of the present application. Specifically, the video decoding method provided in this embodiment includes the following steps:

Step 902: Obtain and decode a video bitstream to obtain an original reference video frame and a target feature.

Step 904: Adjust a resolution of the original reference video frame to obtain an adjusted reference video frame with a first preset resolution; and perform feature extraction on the adjusted reference video frame through a feature extraction network to obtain a reference feature.

Specifically, in this step, the original reference video frame can be downsampled to obtain an adjusted reference video frame with a first preset resolution.

Step 906: Input the reference feature and the target feature into a motion estimation network, and perform motion estimation through the motion estimation network to obtain a first motion estimation result.

Step 908: Adjust a resolution of the first motion estimation result to obtain a third motion estimation result.

If the original reference video frame is downsampled in step 904, then correspondingly, in this step, the first motion estimation result can be upsampled to obtain a third motion estimation result.

Step 910: Input the third motion estimation result and the original reference video frame into a generative network, and deform the original reference video frame through the generative network to generate a reconstructed video frame with a same resolution as the original reference video frame.

A sampling factor used in the resolution adjustment in the above step 908 is set according to the resolution of the original reference video frame and the structural parameters of the generative network. Specifically, in order to smoothly perform the deformation processing in the generative network, the resolution of the third motion estimation result can match (be equal to) the resolution of the original reference video frame that has been downsampled through a downsampling subnetwork.

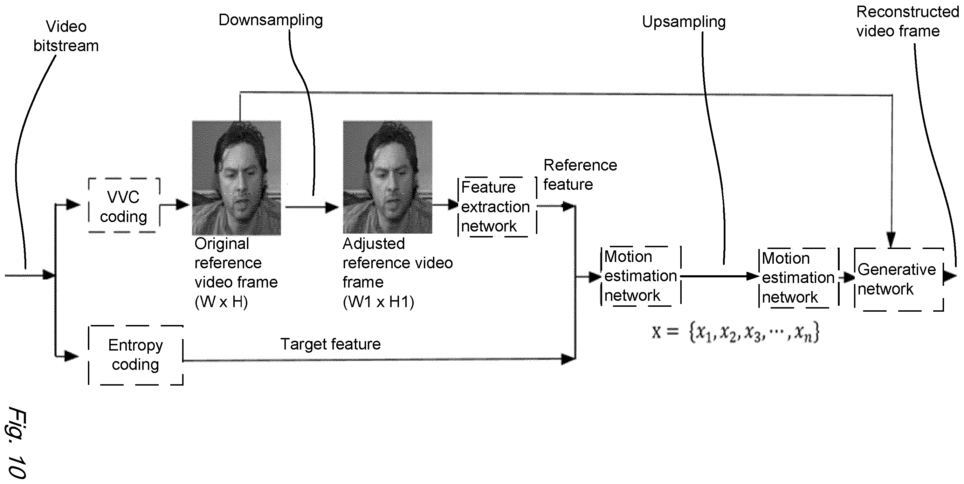

Referring to FIG. 10, FIG. 10 is a schematic diagram of a scenario corresponding to the fifth embodiment of the present application. The embodiments of the present application will be illustrated below using a specific scenario example with reference to the schematic diagram shown in FIG. 10:

decoding a video bitstream to obtain an original reference video frame with a resolution of W×H and a target feature; downsampling the original reference video frame to obtain an adjusted reference video frame with a resolution of W1×H1 (a first preset resolution); and obtaining a corresponding reference feature through a feature extraction network; performing motion estimation on the reference feature and the target feature to obtain a first motion estimation result with the first preset resolution; determining a target scaling factor from a scaling factor sequence $x = \{x_1, x_2, x_3, \dots, x_{1n}\}$ to upsample the first motion estimation result to obtain a third motion estimation result; and generating a reconstructed video frame with a same resolution as the original reference video frame based on the third motion estimation result and the original reference video frame through a generative network.

In the embodiments of the present application, in a decoding stage, resolutions of original reference video frames are also unified, and the original reference video frames are converted into adjusted reference video frames with a fixed resolution, thereby obtaining reference features and target features with a fixed resolution. As such, features finally input to a motion estimation network and a generative network are also features with a fixed resolution, and only one motion estimation network and one generative network are required to achieve decoding in scenarios having a plurality of target video frames with different resolutions. In the embodiments of the present application, for original target video frames with a variety of different resolutions, only one set of neural network models is required to perform encoding and decoding operations, which has a wider range of applications and a simpler and more convenient process of operation.

In addition, in the embodiments of the present application, when the generative network outputs a result, no resolution adjustment (upsampling or downsampling) is performed on the result. Therefore, visual artifacts in a final reconstructed video frame can be effectively avoided.

The video decoding method of this embodiment can be executed by any appropriate electronic device with data capabilities, including but not limited to, a server, a PC, etc.

Sixth Embodiment

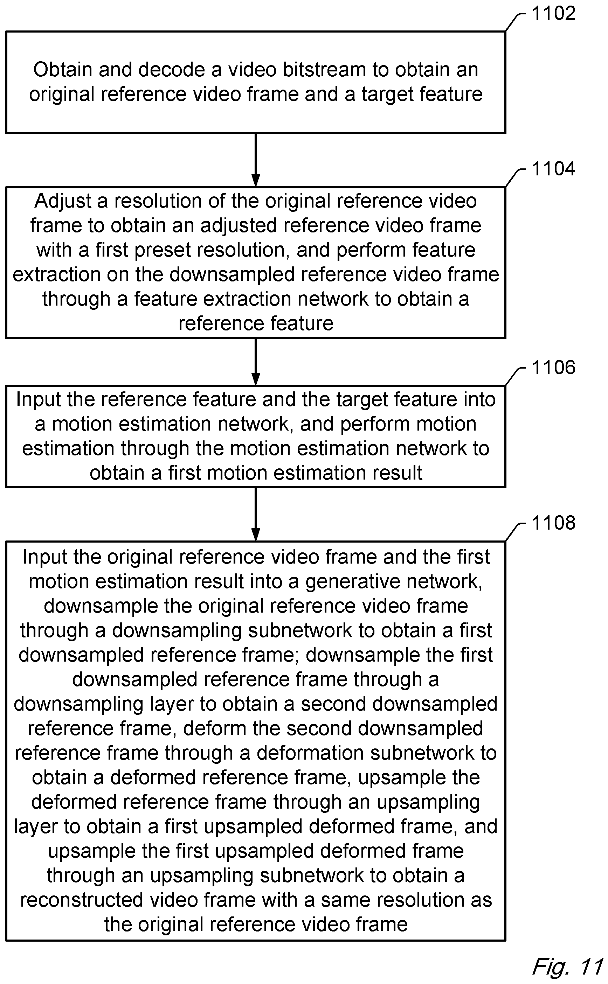

Referring to FIG. 11, FIG. 11 is a flowchart of a video decoding method according to the sixth embodiment of the present application. Specifically, the video decoding method provided in this embodiment includes the following steps:
Step 1102: Obtain and decode a video bitstream to obtain an original reference video frame and a target feature.

Step 1104: Adjust a resolution of the original reference video frame to obtain an adjusted reference video frame with a first preset resolution, and perform feature extraction on the downsampled reference video frame through a feature extraction network to obtain a reference feature.

Specifically, in this step, the original reference video frame can be downsampled to obtain an adjusted reference video frame with a first preset resolution.

Step 1106: Input the reference feature and the target feature into a motion estimation network, and perform motion estimation through the motion estimation network to obtain a first motion estimation result.

Step 1108: Input the original reference video frame and the first motion estimation result into a generative network, downsample the original reference video frame through a downsampling subnetwork to obtain a first downsampled reference frame; downsample the first downsampled reference frame through a downsampling layer to obtain a second downsampled reference frame, deform the second downsampled reference frame through a deformation subnetwork to obtain a deformed reference frame, upsample the deformed reference frame through an upsampling layer to obtain a first upsampled deformed frame, and upsample the first upsampled deformed frame through an upsampling subnetwork to obtain a reconstructed video frame with a same resolution as the original reference video frame.

Specifically, a sampling factor used by the downsampling layer when downsampling the first downsampled reference frame is the reciprocal of a sampling factor used by the upsampling layer when upsampling the first upsampled deformed frame. In other words, if the sampling factor used by the downsampling layer when downsampling the first downsampled reference frame is $x_1$, the sampling factor used by the upsampling layer when upsampling the first upsampled deformed frame is $1/x_1$.

The sampling factor used by the downsampling layer to downsample the first downsampled reference frame is set according to the resolution of the original reference video frame, the first preset resolution, and the structural parameters of the generative network. Specifically, after the original reference video frame is input into the generative network, the resolution of the second downsampled reference frame finally output by the downsampling layer is the first preset resolution.

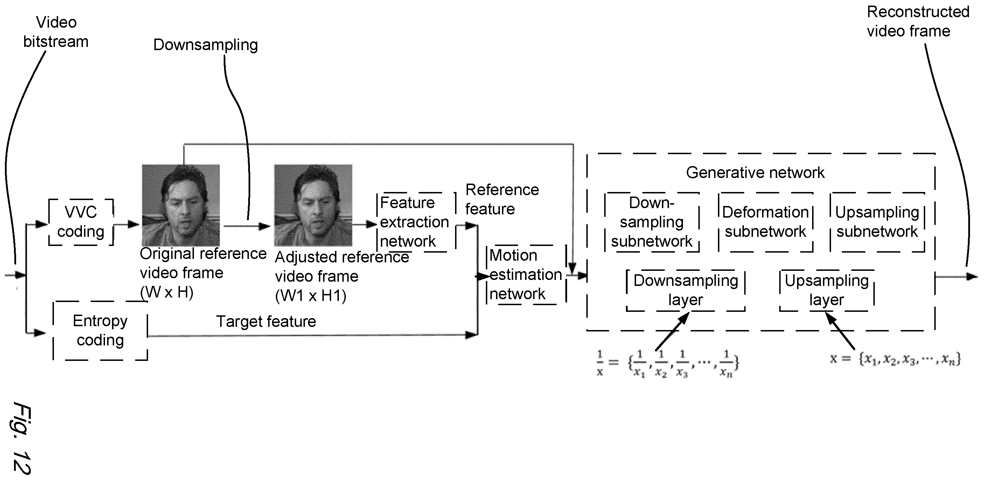

Referring to FIG. 12, FIG. 12 is a schematic diagram of a scenario corresponding to the sixth embodiment of the present application. The embodiments of the present application will be illustrated below using a specific scenario example with reference to the schematic diagram shown in FIG. 12:
decoding a video bitstream to obtain an original reference video frame with a resolution of W×H and a target feature; downsampling the original reference video frame to obtain an adjusted reference video frame with a resolution of W1×H1 (a first preset resolution); and obtaining a corresponding reference feature through a feature extraction network; performing motion estimation on the reference feature and the target feature to obtain a first motion estimation result with the first preset resolution; inputting the original reference video frame and the first motion estimation result into a generative network, and downsampling, using a target scaling factor determined from a scaling factor sequence

$$\frac{1}{x} = \left\{ \frac{1}{x_1}, \frac{1}{x_2}, \frac{1}{x_3}, \dots, \frac{1}{x_n} \right\}$$

in a downsampling layer in the generative network, a first downsampled reference frame that has been obtained after going through a downsampling subnetwork, to obtain a second downsampled reference frame; deforming the second downsampled reference frame by a deformation subnetwork to obtain a deformed reference frame; upsampling, by an upsampling layer, the deformed reference frame to obtain a first upsampled deformed frame using a target scaling factor determined from a scaling factor sequence $x = \{x_1, x_2, x_3, \dots, x_{1n}\}$; and upsampling the first upsampled deformed frame again through an upsampling subnetwork to finally obtain a reconstructed video frame with a same resolution as the original reference video frame.

In the embodiments of the present application, in a decoding stage, resolutions of original reference video frames are also unified, and the original reference video frames are converted into adjusted reference video frames with a fixed resolution, thereby obtaining reference features and target features with a fixed resolution. As such, features finally input to a motion estimation network and a generative network are also features with a fixed resolution, and only one motion estimation network and one generative network are required to achieve decoding in scenarios having a plurality of target video frames with different resolutions. In the embodiments of the present application, for original target video frames with a variety of different resolutions, only one set of neural network models is required to perform encoding and decoding operations, which has a wider range of applications and a simpler and more convenient process of operation.

The video decoding method of this embodiment can be executed by any appropriate electronic device with data capabilities, including but not limited to, a server, a PC, etc.

Seventh Embodiment

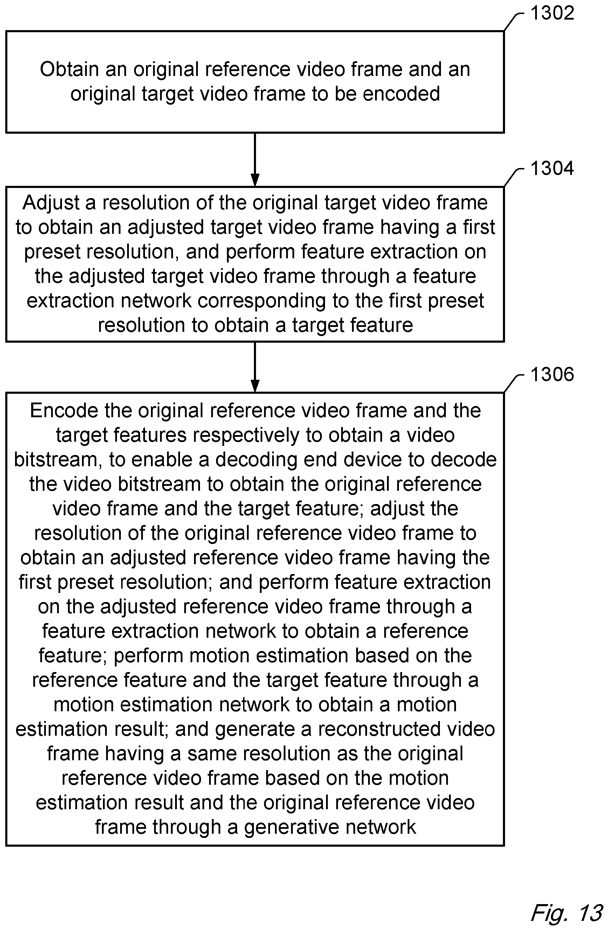

Referring to FIG. 13, FIG. 13 is a flowchart of a video encoding method according to the seventh embodiment of the present application. Specifically, the video encoding method provided in this embodiment includes the following steps:
Step 1302: Obtain an original reference video frame and an original target video frame to be encoded.

Step 1304: Adjust a resolution of the original target video frame to obtain an adjusted target video frame having a first preset resolution, and perform feature extraction on the adjusted target video frame through a feature extraction network corresponding to the first preset resolution to obtain a target feature.

Step 1306: Encode the original reference video frame and the target features respectively to obtain a video bitstream, to enable a decoding end device to decode the video bitstream to obtain the original reference video frame and the target feature; adjust the resolution of the original reference video frame to obtain an adjusted reference video frame having the first preset resolution; and perform feature extraction on the adjusted reference video frame through a feature extraction network to obtain a reference feature; perform motion estimation based on the reference feature and the target feature through a motion estimation network to obtain a motion estimation result; and generate a reconstructed video frame having a same resolution as the original reference video frame based on the motion estimation result and the original reference video frame through a generative network.

**In** the video encoding method of this embodiment, details of implementations of each step can be referenced to corresponding steps in any of the second embodiment to the sixth embodiment as described above, and will not be repeated herein.

According to the video encoding method provided by the embodiments of the present application, in an encoding stage, after original target video frames to be encoded are obtained, resolutions of the original target video frames are unified through a resolution adjustment operation, and the original target video frames are converted into adjusted target video frames with a fixed resolution (a first preset resolution), so that even if the original target video frames have a variety of different resolutions, video frames with a fixed resolution are finally input to a feature extraction network. In this way, there is no need to train multiple feature extraction networks

works for different resolutions, but only one feature extraction network corresponding to the first preset resolution (a feature extraction network for extracting features from video frames with the first preset resolution) is needed to realize encoding of multiple original target video frames with different resolutions, which has a wider scope of application and higher versatility, and at the same time, has a simpler and more convenient operation. In addition, correspondingly, in a decoding stage, resolutions of original reference video frames are also unified, and the original reference video frames are converted into adjusted reference video frames with a fixed resolution, thereby obtaining reference features and target features with a fixed resolution. As such, features finally input to a motion estimation network and a generative network are also features with a fixed resolution, and only one motion estimation network and one generative network are then required to realize decoding in scenarios having target video frames with a variety of different resolutions. In summary, in the embodiments of the present application, only one set of neural network models is required for encoding and decoding operations for original target video frames with various resolutions, which has a wider scope of application and a simpler and more convenient operation process.

Eighth Embodiment

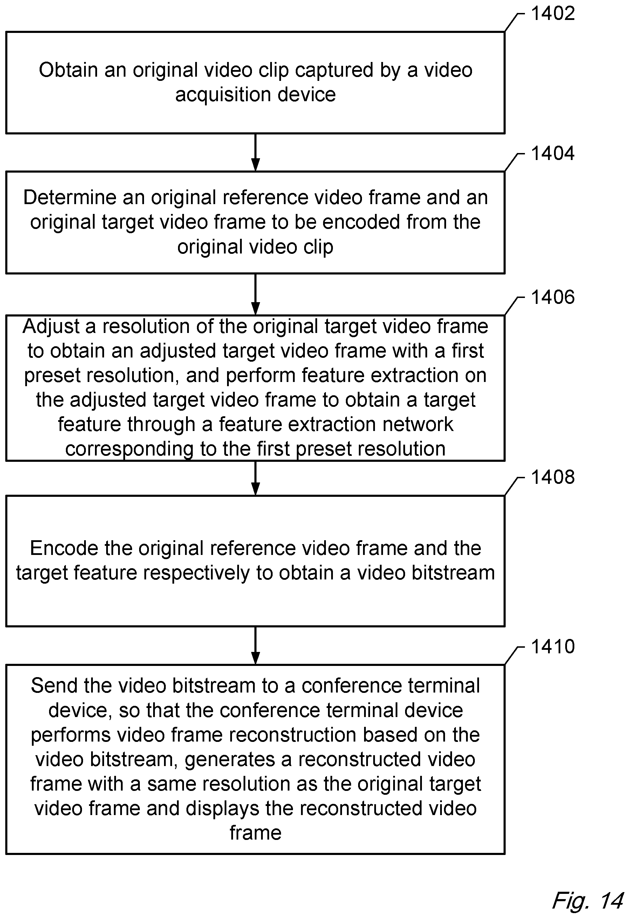

Referring to FIG. 14, FIG. 14 is a flowchart of a video encoding method according to the eighth embodiment of the present application. An application scenario of the video encoding method is that: a video acquisition device obtains a conference video, performs video encoding using the video encoding method provided in this embodiment to form a corresponding video bitstream, and sends thereof to a conference terminal; and the conference terminal decodes the video bitstream to obtain the corresponding conference video screen for display.

Specifically, the video encoding method provided in this embodiment includes the following steps:
Step 1402: Obtain an original video clip captured by a video acquisition device.

Step 1404: Determine an original reference video frame and an original target video frame to be encoded from the original video clip.

Step 1406: Adjust a resolution of the original target video frame to obtain an adjusted target video frame with a first preset resolution, and perform feature extraction on the adjusted target video frame to obtain a target feature through a feature extraction network corresponding to the first preset resolution.

Step 1408: Encode the original reference video frame and the target feature respectively to obtain a video bitstream.

Step 1410: Send the video bitstream to a conference terminal device, so that the conference terminal device performs video frame reconstruction based on the video bitstream, generates a reconstructed video frame with a same resolution as the original target video frame and displays the reconstructed video frame.

Ninth Embodiment

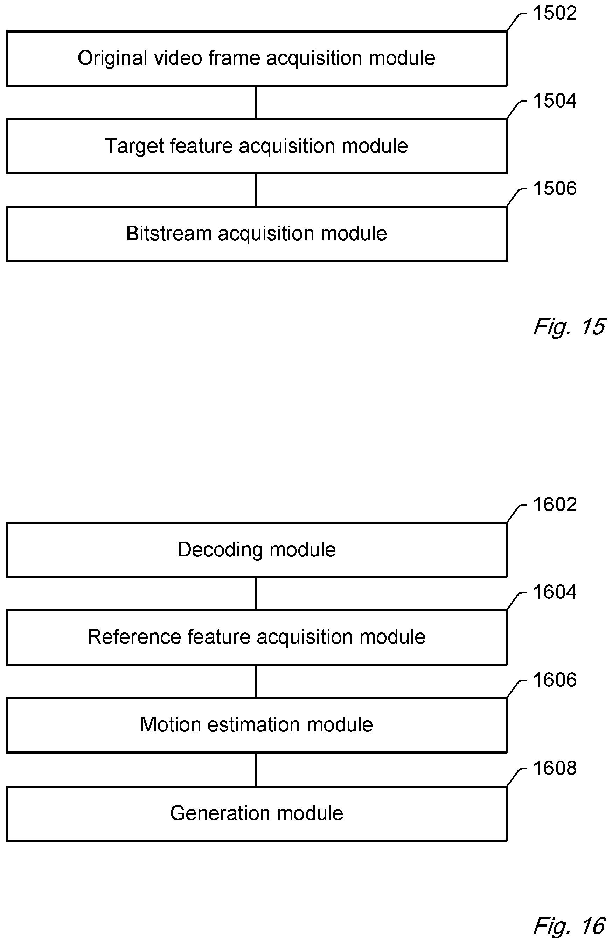

Referring to FIG. 15, FIG. 15 is a structural block diagram of a video encoding apparatus according to the ninth embodiment of the present application. The video encoding apparatus provided in the embodiments of the present application includes:

an original video frame acquisition module 1502 configured to obtain an original reference video frame and an original target video frame to be encoded;
a target feature acquisition module 1504 configured to adjust a resolution of the original target video frame to obtain an adjusted target video frame with a first preset resolution, and perform feature extraction on the adjusted target video frame to obtain a target feature through a feature extraction network corresponding to the first preset resolution; and
a bitstream acquisition module 1506 configured to encode the original reference video frame and the target feature respectively to obtain a video bitstream, and perform video frame reconstruction based on the video bitstream to generate a reconstructed video frame with a same resolution as the original target video frame.

Optionally, in some embodiments, when adjusting the resolution of the original target video frame to obtain the adjusted target video frame with the first preset resolution, the target feature acquisition module 1504 is specifically configured to:

determine a first target scaling factor based on the resolution of the original target video frame; and
use the first target scaling factor to scale the original target video frame to obtain the adjusted target video frame with the first preset resolution.

Optionally, in some of the embodiments, when determining the first target scaling factor based on the resolution of the original target video frame, the target feature obtaining module 1504 is specifically configured to:
determine the first target scaling factor corresponding to the resolution of the original target video frame from a preset first scaling factor sequence according to preset correspondence relationships between resolutions and scaling factors.
The video encoding apparatus of this embodiment is used to implement a corresponding video encoding method in the plurality of method embodiments as described above, and has the beneficial effects of the corresponding method embodiments, which will not be repeated herein. In addition, functional implementations of each module in the video encoding apparatus of this embodiment can refer to the description of the corresponding parts in the aforementioned method embodiments, which will not be repeated herein.

Tenth Embodiment

Referring to FIG. 16, FIG. 16 is a structural block diagram of a video decoding apparatus according to the tenth embodiment of the present application. The video decoding apparatus provided in the embodiments of the present application includes:

a decoding module 1602 configured to obtain and decode a video bitstream to obtain an original reference video frame and a target feature;
a reference feature acquisition module 1604 configured to adjust a resolution of the original reference video frame to obtain an adjusted reference video frame with a first preset resolution, and perform feature extraction on the adjusted reference video frame to obtain a reference feature through a feature extraction network;
a motion estimation module 1606 configured to perform motion estimation based on the reference feature and the target feature to obtain a motion estimation result through a motion estimation network;
a generation module 1608 configured to generate a reconstructed video frame with a same resolution as the original reference video frame based on the motion estimation result and the original reference video frame through a generative network.

Optionally, in some embodiments, the motion estimation module 1606 is specifically configured to:
input the reference feature and the target feature into a motion estimation network, and perform motion estimation through the motion estimation network to obtain a first motion estimation result.
The generation module 1608 is specifically configured to: adjust the resolution of the original reference video frame to obtain an adjusted reference video frame with a second preset resolution;

input the first motion estimation result and the adjusted reference video frame with the second preset resolution into a generative network, perform deformation processing on the adjusted reference video frame with the second preset resolution through the generative network to generate an interim reconstructed video frame with the second preset resolution;
adjust the resolution of the interim reconstructed video frame to obtain a reconstructed video frame with the same resolution as the target video frame.

Optionally, in some embodiments, the motion estimation module 1606 is specifically configured to:

adjust the resolution of the reference feature and the target feature to obtain the adjusted reference feature and the adjusted target feature;
input the adjusted reference feature and the adjusted target feature into the motion estimation network, and perform motion estimation through the motion estimation network to obtain a second motion estimation result.

The generation module 1608 is specifically configured to: input the second motion estimation result and the original reference video frame into the generative network, and perform deformation processing on the original reference video frame through the generative network to generate a reconstructed video frame with a same resolution as the target video frame.

Optionally, in some embodiments, the motion estimation module 1606 is specifically configured to: input the reference feature and the target feature into the motion estimation network, and perform motion estimation through the motion estimation network to obtain the first motion estimation result;

The generation module 1608 is specifically configured to:

adjust a resolution of the first motion estimation result to obtain a third motion estimation result;
input the third motion estimation result and the original reference video frame into the generative network, and perform deformation processing on the original reference video frame through the generative network to generate a reconstructed video frame with a same resolution as the target video frame.

Optionally, in some embodiments, the generation module includes: a downsampling subnetwork, a downsampling layer, a deformation subnetwork, an upsampling layer, and an upsampling subnetwork.

The motion estimation module 1606 is specifically configured to: input the reference feature and the target feature into the motion estimation network, and perform motion estimation through the motion estimation network to obtain the first motion estimation result.

The generation module 1608 is specifically configured to: input the original reference video frame and the first motion estimation result into the generative network, downsample the original reference video frame through the downsampling subnetwork to obtain a first downsampled reference frame; downsample the first downsampled reference frame through the downsampling layer to obtain a second downsampled reference frame; deform the second downsampled reference frame through the deformation subnetwork to obtain a deformed reference frame; upsample the deformed reference frame through the upsampling layer to obtain a first upsampled deformed frame; upsample the first upsampled deformed frame through the upsampling subnetwork to obtain a reconstructed video frame with the same resolution as the original reference video frame.

The video decoding apparatus of this embodiment is used to implement a corresponding video decoding method in the plurality of method embodiments as described above, and has the beneficial effects of the corresponding method embodiments, which will not be repeated herein. In addition, functional implementations of each module in the video encoding apparatus of this embodiment can refer to the description of the corresponding parts in the aforementioned method embodiments, which will not be repeated herein.

Eleventh Embodiment

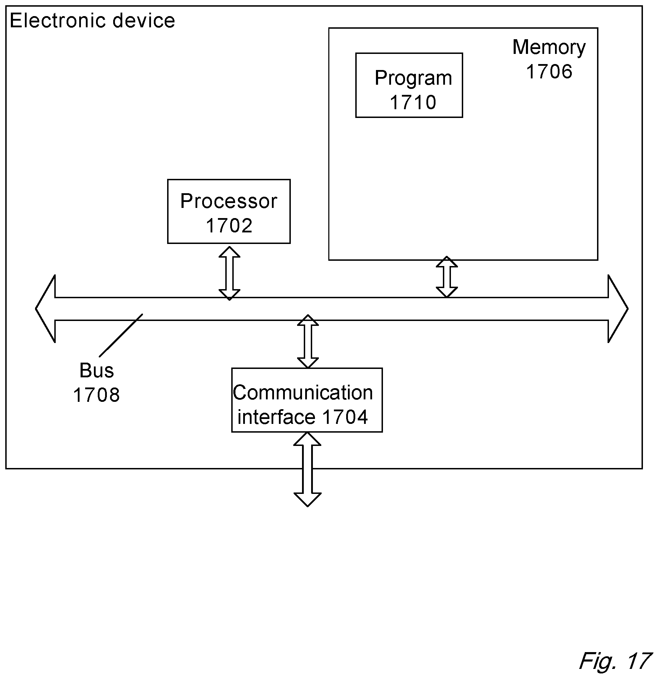

FIG. 17 shows a structural schematic diagram of an electronic device according to the eleventh embodiment of the present application. The specific embodiment of the present application does not limit the specific implementation of the electronic device.

As shown in FIG. 17, a conference terminal may include: a processor 1702, a communication interface 1704, a memory 1706, and a communication bus 1708.

The processor 1702, the communication interface 1704, and the memory 1706 communicate with each other through the communication bus 1708.

The communication interface 1704 is configured to communicate with other electronic devices or servers.

The processor 1702 is configured to execute a program 1710, which can specifically execute the above-mentioned video encoding methods, or the relevant steps in the embodiments of the video decoding methods.

Specifically, the program 1710 may include program codes, and the program codes include computer operation instructions.

The processor 1702 may be a CPU, or an application specific integrated circuit ASIC (Application Specific Integrated Circuit), or one or more integrated circuits configured to implement the embodiments of the present application. One or more processors included in a smart device may be processors of the same type, such as one or more CPUs, or may be processors of different types, such as one or more CPUs and one or more ASICs.

The memory 1706 is configured to store the program 1710. The memory 1706 may include high-speed RAM memory, and may also include non-volatile memory, such as at least one disk memory.

The program 1710 can be specifically configured to enable the processor 1702 to perform the following operations: obtaining an original reference video frame and an original target video frame to be encoded; adjusting a resolution of the original target video frame to obtain an adjusted target video frame with a first preset resolution; and extracting features from the adjusted target video frame to obtain a target feature through a feature extraction network corresponding to the first preset resolution; and encoding the original reference video frame and the target feature respectively to obtain a video bitstream, and performing video frame reconstruction based on the video bitstream to generate a reconstructed video frame with a same resolution as the original target video frame.

Alternatively, the program 1710 can be specifically configured to enable the processor 1702 to perform the following operations: obtaining and decoding a video bitstream to obtain an original reference video frame and a target feature; adjusting a resolution of the original reference video frame to obtain an adjusted reference video frame with a first preset resolution; and extracting features from the adjusted reference video frame through a feature extraction network to obtain a reference feature; performing motion estimation based on the reference feature and the target feature through a motion estimation network to obtain a motion estimation result; and generating a reconstructed video frame with a same resolution as the original reference video frame based on the motion estimation result and the original reference video frame through a generative network.

Alternatively, the program 1710 can be specifically configured to enable the processor 1702 to perform the following operations: obtaining an original reference video frame and an original target video frame to be encoded; adjusting a resolution of the original target video frame to obtain an adjusted target video frame with a first preset resolution; and performing feature extraction on the adjusted target video frame to obtain target features through a feature extraction network corresponding to the first preset resolution; and encoding the original reference video frame and the target features respectively to obtain a video bitstream, to enable a decoding end device to: decode the video bitstream to obtain the original reference video frame and the target features, adjust the resolution of the original reference video frame to obtain an adjusted reference video frame with the first preset resolution, and extract features of the adjusted reference video frame to obtain reference features through the feature extraction network, perform a motion estimation based on the reference features and the target features through a motion estimation network to obtain a motion estimation result, and generate a reconstructed video frame with a same resolution as the original reference video frame based on the motion estimation result and the original reference video frame through a generative network.

Alternatively, the program 1710 can be specifically configured to enable the processor 1702 to perform the following operations: obtaining an original video clip captured by a video acquisition device; determining an original reference video frame and an original target video frame to be encoded from the original video clip; adjusting a resolution of the original target video frame to obtain an adjusted target video frame with a first preset resolution; and extracting features of the adjusted target video frame through a feature extraction network corresponding to the first preset resolution to obtain target features; encoding the original reference video frame and the target features respectively to obtain a video bitstream; and sending the video bitstream to a conference terminal device, to cause the conference terminal device to perform a video frame reconstruction based on the video bitstream, and generate and display a reconstructed video frame with a same resolution as the original target video frame.

Details of implementations of each step in the program 1710 can be referenced to respective descriptions of corresponding steps and units in the above-mentioned video encoding method embodiments, or the video decoding method embodiments, which will not be repeated herein. One skilled in the art can clearly understand that, for the convenience and simplicity of description, specific working processes of the above-described devices and modules can be referenced to corresponding process descriptions in the above-mentioned method embodiments, which will not be repeated herein.

Through the electronic device of this embodiment,

in an encoding stage, after obtaining an original target video frame to be encoded, a resolution of the original target video frame is unified through a resolution adjustment operation, and the original target video frame is converted into an adjusted target video frame with a fixed resolution (a first preset resolution). As such, even if original target video frames have a variety of different resolutions, video frames with a fixed resolution are still input to a feature extraction network. In this way, there is no need to train multiple feature extraction networks for different resolutions, and only one feature extraction network corresponding to the first preset resolution (a feature extraction network for extracting features from video frames with the first preset resolution) is needed to achieve encoding of multiple original target video frames with different resolutions, which has a wider scope of application and higher versatility. At the same time, the operation is simpler and more convenient. In addition, correspondingly, in a decoding stage, a resolution of an original reference video frame is also unified, and the original reference video frame is converted into an adjusted reference video frame with a fixed resolution, thereby obtaining a reference feature and a target feature with a fixed resolution. Therefore, features with a fixed resolution are finally input to a motion estimation network and a generative network, and only one motion estimation network and one generative network are then needed to achieve decoding in various scenarios having target video frames with different resolutions. In summary, in the embodiments of the present application, only one set of neural network models is needed to perform encoding and decoding operations for original target video frames of various resolutions, which has a wider scope of application and a simpler and more convenient operation process.

The embodiments of the present application also provide a computer program product including computer instructions, which instruct a computing device to perform operations corresponding to any of the methods in the multiple method embodiments as described above.

It should be noted that, according to the needs of implementations, various components/steps described in the embodiments of the present application can be split into more components/steps, and two or more components/steps or parts of the operations of components/steps can be combined into new components/steps to achieve the purposes of the embodiments of the present application.

The above-mentioned methods according to the embodiments of the present application can be implemented in hardware, firmware, or implemented as software or computer codes that can be stored in a recording medium (such as a CD ROM, RAM, a floppy disk, a hard disk, or a magneto-optical disk), or implemented as computer codes originally stored in a remote recording medium or a non-temporary machine-readable medium downloaded through a network and stored in a local recording medium, so that the methods described herein can be stored in such software processing on a recording medium using a general-purpose computer, a dedicated processor or programmable or dedicated hardware (such as an ASIC or FPGA). It can be understood that a computer, a processor, a microprocessor controller or programmable hardware includes a storage component (for example, RAM, ROM, a flash memory, etc.) that can store or receive software or computer codes. When the software or computer codes are accessed and executed by a computer, a processor or hardware, the video encoding method(s) described herein or the video decoding method(s) is/are implemented. In addition, when a general-purpose computer accesses the codes for implementing the video encoding method(s) or the video decoding method(s) shown herein, the execution of the codes converts the general-purpose computer into a dedicated computer for executing the video encoding method(s) or the video decoding method(s) shown herein.

One of ordinary skill in the art can realize that the units and method steps of each example described in the embodiments disclosed herein can be implemented in electronic hardware, or a combination of computer software and electronic hardware. Whether these functions are performed in hardware or software depends on the specific application and design constraints of the technical solution. Professional technicans can use different methods to implement the described functions for each specific application, but such implementation should not be considered to be beyond the scope of the embodiments of the present application.

The above methods of implementation are only used to illustrate the embodiments of the present application, and are not limitations on the embodiments of the present application. One of ordinary skill in the art can also make various changes and modifications without departing from the spirit and scope of the embodiments of the present application. Therefore, all equivalent technical solutions also belong to the scope of the embodiments of the present application, and the scope of patent protection of the embodiments of the present application should be defined by the claims.

**Claims**

1. A video encoding method, comprising:

   obtaining an original reference video frame and an original target video frame to be encoded;
   adjusting a resolution of the original target video frame to obtain an adjusted target video frame with a first preset resolution; and performing feature extraction on the adjusted target video frame to obtain a target feature through a feature extraction network corresponding to the first preset resolution; and
   encoding the original reference video frame and the target feature respectively to obtain a video bitstream, and performing video frame reconstruction based on the video bitstream to generate a reconstructed video frame with a same resolution as the original target video frame.

2. The method according to claim 1, wherein adjusting the resolution of the original target video frame to obtain the adjusted target video frame with the first preset resolution comprises:

   determining a first target scaling factor based on the resolution of the original target video frame;
   scaling the original target video frame using the first target scaling factor to obtain the adjusted target video frame with the first preset resolution.

3. The method according to claim 2, wherein determining the first target scaling factor based on the resolution of the original target video frame comprises:
   determining the first target scaling factor corresponding to the resolution of the original target video frame from a preset first scaling factor sequence according to preset correspondence relationships between resolutions and scaling factors.

4. A video decoding method, comprising:

   obtaining and decoding a video bitstream to obtain an original reference video frame and a target feature;

adjusting a resolution of the original reference video frame to obtain an adjusted reference video frame with a first preset resolution; and extracting features from the adjusted reference video frame through a feature extraction network to obtain a reference feature;

performing motion estimation based on the reference feature and the target feature to obtain a motion estimation result through a motion estimation network; and

generating a reconstructed video frame with a same resolution as the original reference video frame based on the motion estimation result and the original reference video frame through a generative network.

5. The method according to claim 4, wherein:
performing the motion estimation based on the reference feature and the target feature to obtain the motion estimation result through the motion estimation network comprises:

inputting the reference feature and the target feature into the motion estimation network, and performing motion estimation through the motion estimation network to obtain a first motion estimation result; and
generating the reconstructed video frame having the same resolution as the target video frame based on the motion estimation result and the original reference video frame through a generative network comprises:

adjusting the resolution of the original reference video frame to obtain an adjusted reference video frame having a second preset resolution;
inputting the first motion estimation result and the adjusted reference video frame having the second preset resolution into the generative network, performing deformation processing on the adjusted reference video frame having the second preset resolution through the generative network, and generating an interim reconstructed video frame having the second preset resolution; and
adjusting a resolution of the interim reconstructed video frame to obtain a reconstructed video frame having the same resolution as the target video frame.

6. The method according to claim 4, wherein:
performing the motion estimation based on the reference feature and the target feature to obtain the motion estimation result through the motion estimation network comprises:

adjusting resolutions of the reference feature and the target feature to obtain an adjusted reference feature and an adjusted target feature; and
inputting the adjusted reference feature and the adjusted target feature into the motion estimation network, performing the motion estimation through the motion estimation network, and obtaining a second motion estimation result; and
generating the reconstructed video frame having the same resolution as the target video frame based on the motion estimation result and the original reference video frame through the generation network comprises:
inputting the second motion estimation result and the original reference video frame into the generative network, performing deformation processing on the original reference video frame through the generative network, and generating the reconstructed video frame having the same resolution as the target video frame.

7. The method according to claim 4, wherein:
performing the motion estimation based on the reference feature and the target feature to obtain the motion estimation result through the motion estimation network comprises:

inputting the reference feature and the target feature into the motion estimation network, and performing the motion estimation through the motion estimation network to obtain the first motion estimation result; and
generating the reconstructed video frame having the same resolution as the target video frame based on the motion estimation result and the original reference video frame through the generation network comprises:

adjusting a resolution of the first motion estimation result to obtain a third motion estimation result; and
inputting the third motion estimation result and the original reference video frame into the generation network, performing deformation processing on the original reference video frame through the generative network, and generating the reconstructed video frame having the same resolution as the target video frame.

8. The method according to claim 4, wherein:

the generation network includes: a downsampling subnetwork, a downsampling layer, a deformation subnetwork, an upsampling layer and an upsampling subnetwork;
performing the motion estimation based on the reference feature and the target feature to obtain the motion estimation result through the motion estimation network comprises:

inputting the reference feature and the target feature into the motion estimation network, and performing motion estimation through the motion estimation network to obtain a first motion estimation result; and generating the reconstructed video frame having the same resolution as the target video frame based on the motion estimation result and the original reference video frame through a generative network comprises: inputting the original reference video frame and the first motion estimation result into the generative network, downsampling the original reference video frame by the downsampling sub-network to obtain a first downsampled reference frame; downsampling the first downsampled reference frame by the downsampling layer to obtain a second downsampled reference frame; deforming the second downsampled reference frame by the deformation subnetwork to obtain a deformed reference frame; upsampling the deformed reference frame by the upsampling layer to obtain a first upsampled deformed frame; and upsampling the first upsampled deformed frame by the upsampling subnetwork to obtain the reconstructed video frame with the same resolution as the target video frame.

9. A video encoding method, comprising:

obtaining an original reference video frame and an original target video frame to be encoded; adjusting a resolution of the original target video frame to obtain an adjusted target video frame with a first preset resolution; and performing feature extraction on the adjusted target video frame to obtain target features through a feature extraction network corresponding to the first preset resolution; and encoding the original reference video frame and the target features respectively to obtain a video bitstream, to enable a decoding end device to: decode the video bitstream to obtain the original reference video frame and the target features, adjust the resolution of the original reference video frame to obtain an adjusted reference video frame with the first preset resolution, and extract features of the adjusted reference video frame to obtain reference features through the feature extraction network, perform a motion estimation based on the reference features and the target features through a motion estimation network to obtain a motion estimation result, and generate a reconstructed video frame with a same resolution as the original reference video frame based on the motion estimation result and the original reference video frame through a generative network.

10. A video encoding method, comprising:

obtaining an original video clip captured by a video acquisition device; determining an original reference video frame and an original target video frame to be encoded from the original video clip; adjusting a resolution of the original target video frame to obtain an adjusted target video frame with a first preset resolution; and extracting features of the adjusted target video frame through a feature extraction network corresponding to the first preset resolution to obtain target features; encoding the original reference video frame and the target features respectively to obtain a video bitstream; and sending the video bitstream to a conference terminal device, to cause the conference terminal device to perform a video frame reconstruction based on the video bitstream, and generate and display a reconstructed video frame with a same resolution as the original target video frame.

11. An electronic device, comprising: a processor, a memory, a communication interface and a communication bus, wherein the processor, the memory and the communication interface communicate with each other through the communication bus; and the memory is configured to store at least one executable instruction, and the executable instruction enables the processor to perform operations corresponding to the video encoding method according to any one of claims 1-3, 9, or 10, or operations corresponding to the video decoding method according to any one of claims 4-8.

12. A computer storage medium having a computer program stored thereon, which, when executed by a processor, implements the video encoding method as claimed in any one of claims 1-3, 9, or 10, or implements the video decoding method as claimed in any one of claims 4-8.

13. A computer program product, comprising computer instructions, the computer instructions instructing a computing device to perform operations corresponding to the video encoding method as claimed in any one of claims 1-3, 9, or 10, or to perform operations corresponding to the video decoding method as

**EP 4 546 792 A1**

claimed in any one of claims 4-8.

Fig. 1

202

Obtain an original reference video frame and an original target video frame to be encoded

204

Adjust a resolution of the original target video frame to obtain an adjusted target video frame with a first preset resolution

206

Perform feature extraction on the adjusted target video frame to obtain target features through a feature extraction network corresponding to the first preset resolution

208

Separately encode the original reference video frame and the target feature to obtain a video bitstream, and perform a video frame reconstruction based on the video bitstream to generate a reconstructed video frame with a same resolution as the original target video frame

*Fig. 2*

Fig. 3

/— 402

Obtain and decode a video bitstream to obtain an original reference video frame and a target feature

/— 404

Adjust a resolution of the original reference video frame to obtain an adjusted reference video frame with a first preset resolution

/— 406

Extract a feature from the adjusted reference video frame through a feature extraction network to obtain a reference feature

/— 408

Perform a motion estimation based on the reference feature and the target feature through a motion estimation network to obtain a motion estimation result

/— 410

Generate a reconstructed video frame with a same resolution as the original reference video frame based on the motion estimation result and the original reference video frame through the generative network

*Fig. 4*

502

Obtain and decode a video bitstream to obtain an
original reference video frame and a target feature

504

Adjust a resolution of the original reference video
frame to obtain an adjusted reference video frame
with a first preset resolution, and extract a feature
from the adjusted reference video frame through a
feature extraction network to obtain a reference
feature

506

Input the reference feature and the target feature into
a motion estimation network, perform motion
estimation through the motion estimation network to
obtain a first motion estimation result

508

Adjust the resolution of the original reference video
frame to obtain an adjusted reference video frame
with a second preset resolution

510

Input the first motion estimation result and the
adjusted reference video frame with the second
preset resolution into the generative network, and
perform deformation processing on the adjusted
reference video frame with the second preset
resolution through the generative network to generate
an interim reconstructed video frame with the second
preset resolution

512

Adjust a resolution of the interim reconstructed video
frame to obtain a reconstructed video frame with a
same resolution as the original reference video frame

*Fig. 5*

Fig. 6

702

Obtain and decode a video bitstream to obtain an original reference video frame and a target feature

704

Adjust a resolution of the original reference video frame to obtain an adjusted reference video frame with a first preset resolution, and perform feature extraction on the adjusted reference video frame through a feature extraction network to obtain a reference feature

706

Perform resolution adjustment on the reference feature and the target feature to obtain an adjusted reference feature and an adjusted target feature

708

Input the adjusted reference feature and the adjusted target feature into a motion estimation network, and perform motion estimation through the motion estimation network to obtain a second motion estimation result

710

Input the second motion estimation result and the original reference video frame into a generative network, and deform the original reference video frame through the generative network to generate a reconstructed video frame with a same resolution as the original reference video frame

*Fig. 7*

Fig. 8

902

Obtain and decode a video bitstream to obtain an original reference video frame and a target feature

904

Adjust a resolution of the original reference video frame to obtain an adjusted reference video frame with a first preset resolution; and perform feature extraction on the adjusted reference video frame through a feature extraction network to obtain a reference feature

906

Input the reference feature and the target feature into a motion estimation network, and perform motion estimation through the motion estimation network to obtain a first motion estimation result

908

Adjust a resolution of the first motion estimation result to obtain a third motion estimation result

910

Input the third motion estimation result and the original reference video frame into a generative network, and deform the original reference video frame through the generative network to generate a reconstructed video frame with a same resolution as the original reference video frame

*Fig. 9*

Fig. 10

1102

Obtain and decode a video bitstream to obtain an original reference video frame and a target feature

1104

Adjust a resolution of the original reference video frame to obtain an adjusted reference video frame with a first preset resolution, and perform feature extraction on the downsampled reference video frame through a feature extraction network to obtain a reference feature

1106

Input the reference feature and the target feature into a motion estimation network, and perform motion estimation through the motion estimation network to obtain a first motion estimation result

1108

Input the original reference video frame and the first motion estimation result into a generative network, downsample the original reference video frame through a downsampling subnetwork to obtain a first downsampled reference frame; downsample the first downsampled reference frame through a downsampling layer to obtain a second downsampled reference frame, deform the second downsampled reference frame through a deformation subnetwork to obtain a deformed reference frame, upsample the deformed reference frame through an upsampling layer to obtain a first upsampled deformed frame, and upsample the first upsampled deformed frame through an upsampling subnetwork to obtain a reconstructed video frame with a same resolution as the original reference video frame

*Fig. 11*

Fig. 12

1302

Obtain an original reference video frame and an original target video frame to be encoded

1304

Adjust a resolution of the original target video frame to obtain an adjusted target video frame having a first preset resolution, and perform feature extraction on the adjusted target video frame through a feature extraction network corresponding to the first preset resolution to obtain a target feature

1306

Encode the original reference video frame and the target features respectively to obtain a video bitstream, to enable a decoding end device to decode the video bitstream to obtain the original reference video frame and the target feature; adjust the resolution of the original reference video frame to obtain an adjusted reference video frame having the first preset resolution; and perform feature extraction on the adjusted reference video frame through a feature extraction network to obtain a reference feature; perform motion estimation based on the reference feature and the target feature through a motion estimation network to obtain a motion estimation result; and generate a reconstructed video frame having a same resolution as the original reference video frame based on the motion estimation result and the original reference video frame through a generative network

Fig. 13

1402

Obtain an original video clip captured by a video acquisition device

1404

Determine an original reference video frame and an original target video frame to be encoded from the original video clip

1406

Adjust a resolution of the original target video frame to obtain an adjusted target video frame with a first preset resolution, and perform feature extraction on the adjusted target video frame to obtain a target feature through a feature extraction network corresponding to the first preset resolution

1408

Encode the original reference video frame and the target feature respectively to obtain a video bitstream

1410

Send the video bitstream to a conference terminal device, so that the conference terminal device performs video frame reconstruction based on the video bitstream, generates a reconstructed video frame with a same resolution as the original target video frame and displays the reconstructed video frame

Fig. 14

1502

Original video frame acquisition module

1504

Target feature acquisition module

1506

Bitstream acquisition module

*Fig. 15*

1602

Decoding module

1604

Reference feature acquisition module

1606

Motion estimation module

1608

Generation module

*Fig. 16*

Electronic device

Memory
1706

Program
1710

Processor
1702

Bus
1708

Communication
interface 1704

*Fig. 17*

## INTERNATIONAL SEARCH REPORT

International application No.

**PCT/CN2023/101958**

### A. CLASSIFICATION OF SUBJECT MATTER

H04N 19/85(2014.01)i

According to International Patent Classification (IPC) or to both national classification and IPC

### B. FIELDS SEARCHED

Minimum documentation searched (classification system followed by classification symbols)

IPC:H04N

Documentation searched other than minimum documentation to the extent that such documents are included in the fields searched

Electronic data base consulted during the international search (name of data base and, where practicable, search terms used)

CNKI, CNABS, CNTXT, WOTXT, USTXT, EPTXT, VEN: 视频, 参考, 分辨率, 调整, 特征, 提取, 运动向量, 编码, 解码, 重建, 比特流, 缩放, video, code, decode, reference, resolution, adjust, feature, characteristic, extract, motion vector, MV, rebuild, reconstruction, bitstream, zoom

### C. DOCUMENTS CONSIDERED TO BE RELEVANT

| Category* | Citation of document, with indication, where appropriate, of the relevant passages | Relevant to claim No. |
|---|---|---|
| PX | CN 114979672 A (ALIBABA (CHINA) CO., LTD.) 30 August 2022 (2022-08-30) claims 1-13 | 1-13 |
| X | US 2022021872 A1 (TENCENT TECHNOLOGY SHENZHEN CO., LTD.) 20 January 2022 (2022-01-20) description, paragraphs 28-113, and figures 1-9 | 1, 4, 9-13 |
| A | CN 109495746 A (JIANHU YUNFEI DATA TECHNOLOGY CO., LTD.) 19 March 2019 (2019-03-19) entire document | 1-13 |
| A | WO 2019242563 A1 (TENCENT TECHNOLOGY SHENZHEN CO., LTD.) 26 December 2019 (2019-12-26) entire document | 1-13 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **18 August 2023** | **31 August 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/101958**

| Patent document cited in search report | | | Publication date (day/month/year) | Patent family member(s) | | | Publication date (day/month/year) |
|---|---|---|---|---|---|---|---|
| CN | 114979672 | A | 30 August 2022 | None | | | |
| US | 2022021872 | A1 | 20 January 2022 | EP | 4037321 | A1 | 03 August 2022 |
| | | | | EP | 4037321 | A4 | 23 November 2022 |
| | | | | WO | 2021057697 | A1 | 01 April 2021 |
| CN | 109495746 | A | 19 March 2019 | None | | | |
| WO | 2019242563 | A1 | 26 December 2019 | US | 2020374525 | A1 | 26 November 2020 |
| | | | | US | 11412228 | B2 | 09 August 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210716251